# EUROPÄISCHE PATENTSCHRIFT

(11) **EP 3 566 270 B1**
(45) Veröffentlichungstag und Bekanntmachung des Hinweises auf die Patenterteilung: **27.01.2021**
(21) Anmeldenummer: 18707623.7
(22) Anmeldetag: 13.02.2018
(51) Int. Cl.: H02B 1/32

(54) **MONTAGEPLATTENANORDNUNG UND EIN ENTSPRECHENDES VERFAHREN**
MOUNTING PLATE ASSEMBLY AND A CORRESPONDING METHOD
ENSEMBLE PLAQUE DE MONTAGE ET PROCÉDÉ CORRESPONDANT

(30) Priorität: 21.04.2017 DE 102017108518
(43) Veröffentlichungstag der Anmeldung: 13.11.2019
(73) Patentinhaber: Rittal GmbH & Co. KG, 35745 Herborn (DE)
(72) Erfinder: BOEHME, Siegfried, 06766 Wolfen (DE); HOLIGHAUS, Heiko, 35713 Eschenburg (DE); BRÜCK, Daniel, 35764 Sinn (DE)
(74) Vertreter: Angerhausen, Christoph
(86) Internationale Anmeldenummer: PCT/DE2018/100121
(87) Internationale Veröffentlichungsnummer: WO 2018/192603

(56) Entgegenhaltungen:
- DE-A1-102014 101 404
- DE-C1- 19 737 488

## Beschreibung

Die Erfindung geht aus von einer Montageplattenanordnung mit einem Schaltschrankrahmengestell und einer daran über mindestens einen Montageplattenhalter befestigten Montageplatte, wobei das Schaltschrankrahmengestell einen rechteckigen Bodenrahmen aus vier Profilstreben aufweist, der an seiner Außenseite einen gegenüber einer äußeren Dichtebene des Schaltschrankrahmengestells zum Inneren des Schaltschrankrahmengestells versetzten Befestigungsabschnitt aufweist. Eine derartige Montageplattenanordnung ist aus der DE 10 2014 101 404 A1 und der DE19737488 C1 bekannt.

Um eine möglichst gute Raumausnutzung des Schaltschrankinnenraums zu erreichen, ist es grundsätzlich wünschenswert, die Montage im Inneren des Schaltschrankrahmengestells so weit wie möglich hinten, das heißt unter möglichst geringem Abstand zur Rückseite des Schaltschranks anzuordnen. Insbesondere dann, wenn die Montageplatte vor der Montage im Schaltschrank bereits bestückt worden ist und damit ein erhebliches Gewicht aufweisen kann, ist es zweckmäßig, dass die Befestigung der Montageplatte am Schaltschrankrahmengestell möglichst einfach gestaltet ist.

Es ist daher die Aufgabe der Erfindung, eine Montageplattenanordnung der eingangs beschriebenen Art derart weiterzuentwickeln, dass sie sogleich die platzsparende und komfortable Montage einer Montageplatte im Inneren des Schaltschrankrahmengestells erlaubt.

Diese Aufgabe wird durch eine Montageplattenanordnung mit den Merkmalen des Anspruchs 1 gelöst. Der nebengeordnete Anspruch 14 betrifft ein entsprechendes Verfahren für die Montage einer Montageplattenanordnung. Die abhängigen Ansprüche betreffen jeweils vorteilhafte Ausführungsformen der Erfindung.

Demgemäß ist bei der Montageplattenanordnung vorgesehen, dass der Montageplattenhalter mehrteilig ausgebildet ist, mit einem Haltewinkel und mit einem mit dem Haltewinkel verbundenen Sockel, wobei der Haltewinkel mit dem Befestigungsabschnitt und mit der Montageplatte verbunden ist und die Montageplatte auf dem Sockel aufsteht, und wobei der Montageplattenhalter mit dem Sockel auf einer Profilseite einer der vier Profilstreben des rechteckigen Bodenrahmens aufgesetzt ist, die sich zwischen der Dichtebene und dem Befestigungsabschnitt erstreckt.

Die beschriebene Montageplattenanordnung erlaubt es insbesondere, dass die Montageplatte "von außen" an der Rückseite des Schaltschrankrahmengestells auf die Bodengruppe aufgestellt wird, um im Anschluss die Montageplatte lediglich noch mit dem Rahmengestell zu verbinden, beispielsweise an einer Oberkante der Montagplatte mit dem Rahmengestell zu verschrauben. Es ist somit insbesondere nicht mehr erforderlich, die Montageplatte über die Türseite des Schaltschrankrahmengestells durch den Schaltschrankinnenraum hindurch bis in eine hinterste Position des Rahmengestells zu dirigieren. Stattdessen kann die Montageplatte mit dem vormontierten mindestens einen Montageplattenhalter von außen auf die Profilseite der Profilstrebe des rechteckigen Bodenrahmens aufgesetzt und gegebenenfalls in die Vertikale eingeschwenkt werden.

Es kann vorgesehen sein, dass der Haltewinkel an seinem dem Inneren des Schaltschrankrahmengestells zugewandten Ende einen Haltesteg aufweist, mit dem er den Befestigungsabschnitt der Profilstrebe des rechteckigen Bodenrahmens hintergreift, wenn sich die Montageplatte in der Vertikalen befindet. Ebenso kann der Haltesteh dazu eingerichtet sein, den Befestigungsabschnitt freizugeben, wenn die Montageplatte zwar auf der Profilstrebe aufgesetzt, jedoch gegenüber der Vertikalen um einen bestimmten Winkel, beispielsweise 30° verkippt ist. Insbesondere dann, wenn bereits Komponenten an der dem Schaltschrankinneren zugewandten Montageseite der Montageplatte angeordnet sind, weist die Montageplatte in der Vertikalen ein Kippmoment auf, welches die Montageplatte in Richtung des Befestigungsabschnitts bzw. in Richtung der Schaltschranktürseite drückt.

Der Haltewinkel kann mit dem Sockel über eine Steckverbindung verbunden sein. Es kann weiterhin vorgesehen sein, dass der Sockel einen Durchlass aufweist, durch den sich der Haltewinkel mit einer Befestigungslasche zwischen gegenüberliegenden Seiten des Sockels hindurch erstreckt, wobei die Montageplatte an der Befestigungslasche festgelegt ist.

Der Haltewinkel kann einen L-förmigen Abschnitt aufweisen, mit dem er den Befestigungsabschnitt umgreift. Insbesondere kann an dem freien Ende des L-förmigen Abschnitts ein Haltesteg ausgebildet sein, der den Befestigungsabschnitt hintergreift und somit die Montageplatte in Richtung senkrecht zur Dichtebene festlegt, zumindest dann, wenn die Montageplatte in der Vertikalen angeordnet ist. Es kann vorgesehen sein, dass der Haltesteg mit dem Befestigungsabschnitt außer Eingriff steht, wenn die Montageplatte gegenüber der Vertikalen angewinkelt ist, beispielsweise um 30°-45°.

Der Sockel kann mit einer Auflageseite auf einem L-förmigen Abschnitt des Haltewinkels, mit dem er den Befestigungsabschnitt umgreift, aufliegen, wobei die Montageplatte mit einer Stirnseite einer Umkantung an ihrem Außen umfang auf der Auflageseite aufsteht. Die Montageplatte kann jeweils eine Umkantung insbesondere an ihren gegenüber liegenden Rändern aufweisen, vorzugsweise an ihren beiden gegenüberliegenden parallelen vertikalen Rändern. Die Umkantung kann beispielsweise als C-Umkantung oder als U-Umkantung ausgebildet sein. An ihrem horizontalen unteren Rand kann die Montageplatte eine als 90°-Abkantung von der Montageebene abgekantete Horizontalumkantung aufweisen, die im Bereich der Umkantungen an den vertikalen Rändern der Montageplatte ausgespart ist, so dass eine Aufnahme gebildet ist, in welcher die Auflageseite des Sockels aufgenommen ist.

Der Sockel kann einen Abstandshalter und eine Auflageseite aufweisen, wobei sich der Haltewinkel mit einer Befestigungslasche durch die Auflageseite erstreckt, und wobei an der Befestigungslasche die Montageplatte festgelegt ist.

Die Auflageseite kann einen ersten Durchbruch und ein L-förmiger Abschnitt des Haltewinkels, mit dem der Haltewinkel den Befestigungsabschnitt umgreift, kann einen zweiten Durchbruch aufweisen. Der Befestigungsabschnitt kann einen dritten Durchbruch aufweisen, wobei die genannten drei Durchbrüche fluchten und ein Befestigungsmittel, insbesondere ein Gewindebolzen durch die fluchtenden Durchbrüche hindurchgeführt ist.

Die Montageplatte kann an einem vertikalen Außenumfang eine Umkantung aufweisen, insbesondere eine C-Umkantung oder eine U-Umkantung, mit einer in einer Montageebene der Montageplatte liegenden ersten Montageprofilseite und einer dazu senkrecht zu der Montageebene beabstandet angeordneten Versteifungsprofilseite. Die Versteifungsprofilseite kann sich parallel zu der Montageprofilseite erstrecken.

In einer ersten Montageposition kann die Montageplatte über die Montageprofilseite an einer Befestigungslasche des Haltewinkels anliegen und festgelegt sein.

In einer zweiten Montageposition kann die Montageplatte über die Versteifungsprofilseite an einer Befestigungslasche des Haltewinkels anliegen und festgelegt sein.

In der ersten Montageposition kann die Montageprofilseite mit einer dem Inneren des Schaltschrankrahmengestells zugewandten inneren Befestigungsprofilseite des Befestigungsabschnitts und/oder in der zweiten Montageposition die Montageprofilseite mit einer der Dichtebene zugewandten äußeren Befestigungsprofilseite des Befestigungsabschnitts fluchten.

Der Haltewinkel kann ein erstes Material und der Sockel ein von dem ersten abweichendes zweites Material aufweisen, wobei das Elastizitätsmodul des ersten Materials größer als das Elastizitätsmodul des zweiten Materials ist. Der Sockel und insbesondere die Auflageseite dieses kann dadurch insbesondere die Funktion eines Dämpfungselements aufweisen. Es hat sich gezeigt, dass bei der Wahl der Materialien für den Sockel und den Haltewinkel in der zuvor beschriebenen Weise der Montageplattenhalter insbesondere bei mechanischer Belastung durch Vibrationen höheren Belastungen als einteilige Montageplattenhalter standhält, insbesondere im Vergleich zu Montageplattenhaltern, die ausschließlich aus Stahl gefertigt sind.

Das erste Material kann beispielsweise ein Metall, insbesondere ein Stahl, und das zweite Material ein Kunststoff, insbesondere ein thermoplastischer Kunststoff und vorzugsweise eine Polyamid sein.

Der Haltewinkel kann ein Z-Profil sein oder als ein Z-Profil ausgebildet sein, mit einem L-förmigen Abschnitt, mit dem der Haltewinkel den Befestigungsabschnitt umgreift, und mit einer über eine 90°-Abkantung in den L-förmigen Abschnitt übergehenden Befestigungslasche, die einen vierten Durchbruch aufweist, der mit einem weiteren Durchbruch in einer Umkantung am Außenumfang der Montageplatte fluchtet. Die Umkantung kann eine U-Umkantung oder eine C-Umkantung und/oder an einer vertikalen Außenkante der Montageplatte angeordnet sein.

Der Sockel kann einen Abstandshalter aufweisen, über den der Sockel auf der Profilseite der Profilstrebe aufsteht, sowie eine Auflageseite, mit der der Montageplattenhalter eine horizontale Befestigungsprofilseite des Befestigungsabschnitts überragt. Ein Durchlass kann durch den Sockel, durch den sich der Haltewinkel mit einer Befestigungslasche erstreckt, in einem Übergang zwischen dem Abstandshalter und der Auflageseite angeordnet sein. Der Haltewinkel kann angrenzend an die 90°-Abkantung mit seiner Befestigungslasche an den Abstandshalter anliegen.

Das Verfahren für die Montage einer Montageplattenanordnung kann die Schritte aufweisen:
- Bereitstellen eines Schaltschrankrahmengestells mit einem rechteckigen Bodenrahmen aus vier Profilstreben, wobei der Bodenrahmen an seiner Außenseite einen gegenüber einer äußeren Dichtebene des Schaltschrankrahmengestells zum Innern des Schaltschrankrahmengestells versetzten Befestigungsabschnitt aufweist;
- Bereitstellen einer Montageplatte und eines Montageplattenhalters, der mehrteilig ausgebildet ist und einen Haltewinkel sowie einen mit dem Haltewinkel lösbar verbundenen Sockel aufweist,
- Montieren des Montageplattenhalters an der Montagplatte, indem eine Befestigungslasche des Haltewinkels an einer Umkantung an einer vertikalen Außenberandung der Montageplatte festgelegt wird, so dass eine Stirnseite der Umkantung auf dem Sockel aufliegt; und
- Aufsetzen der Montageplatte über den Sockel auf einer Profilseite einer der vier Profilstreben, die sich zwischen der Dichtebene und dem Befestigungsabschnitt erstreckt sowie gegebenenfalls Einschwenken der Montageplatte bis eine Montageebene der Montageplatte in die Vertikale gebracht ist.

Das Bereitstellen des Montageplattenhalters kann das Verbinden des Haltewinkels mit dem Sockel aufweisen, indem die Befestigungslasche des Haltewinkels über einen Durchlass des Sockels durch den Sockel hindurchgesteckt wird, bis ein L-förmiger Abschnitt des Haltewinkels an einer Auflageseite des Sockels anliegt.

Das Aufsetzen der Montageplatte kann das Aufsetzen der Montageplatte über die Außenseite des Bodenrahmens und/oder durch die äußere Dichtebene des Schaltschrankrahmengestells aufweisen.

Nach dem Aufsetzen der Montageplatte kann die Montageplatte über eine dem Innern des Schaltschrankrahmengestells zugewandte innere Befestigungsprofilseite des Befestigungsabschnitts entnommen werden. Dazu kann gegebenenfalls vorher ein Befestigungsbolzen, der die Montageplatte mit der Befestigungslasche verbindet, gelöst werden. Die Entnahme der Montageplatte über das Innere des Schaltschranks ist insbesondere dann besonders einfach, wenn die Montageplatte über ihre Versteifungsprofilseite an der Befestigungslasche befestigt ist, bevorzugt indem die Befestigungslasche über die von der Montageebene der Montageplatte abgewandte Außenseite der Versteifungsprofilseite an die Versteifungsprofilseite angelegt und mit dieser verschraubt ist.

Weitere Einzelheiten der Erfindung werden anhand der nachstehenden Figuren erläutert. Dabei zeigt:
- Figur 1: eine erste Ausführungsform eines Montageplattenhalters in perspektivischer Darstellung;
- Figur 2: den Haltewinkel der Ausführungsform gemäß Figur 1 in perspektivischer Darstellung;
- Figur 3: eine Montageplattenanordnung in perspektivischer Sicht auf die Außenseite des Schaltschrankrahmengestells unter Verwendung des Montageplattenhalters gemäß Figur 1;
- Figur 4: eine weitere Ausführungsform einer Montageplattenanordnung in perspektivischer Sicht auf die Außenseite des Schaltschrankrahmengestells;
- Figur 5: eine weitere Ausführungsform eines Montageplattenhalters in perspektivischer Darstellung;
- Figur 6: eine Detailansicht des Sockels des Montageplattenhalters gemäß Figur 5 in perspektivischer Sicht auf die Unterseite des Sockels;
- Figur 7: eine Detailansicht des Haltewinkels des Montageplattenhalters gemäß Figur 5 in perspektivischer Darstellung;
- Figur 8: eine weitere Ausführungsform einer Montageplattenanordnung unter Verwendung des Montageplattenhalters gemäß Figur 5 in einer Querschnittsdarstell ung;
- Figur 9: eine Ausführungsform eines Montageplattenhalters, der in einer ersten Montageposition an einer Montageplatte festgelegt ist;
- Figur 10: eine Montageplattenanordnung unter Verwendung der Anordnung gemäß Figur 9 in perspektivischer Sicht auf die Außenseite des Rahmengestells;
- Figur 11: die Ausführungsform eines Montageplattenhalters gemäß Figur 9, wobei der Montageplattenhalter in einer zweiten Montageposition an der Montageplatte festgelegt ist;
- Figur 12: eine Montageplattenanordnung unter Verwendung der Anordnung gemäß Figur 11 in perspektivischer Sicht auf die Montageebene der Montageplatte;
- Figur 13: den Einschwenkvorgang der Montageplattenanordnung gemäß Figur 12;
- Figur 14: eine Ausführungsforme eines oberen Montageplattenhalters; und
- Figur 15: eine Montagplattenanordnung unter Verwendung des oberen Montageplattenhalters nach Figur 14.

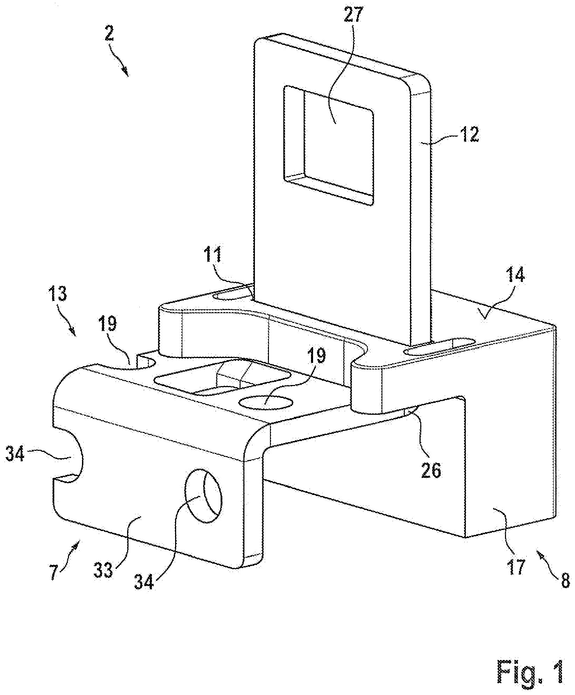

Figur 1 zeigt eine beispielshafte Ausführungsform eines Montageplattenhalters 2. Dieser besteht aus einem Haltewinkel 7 sowie einem Sockel 8, die über eine Steckverbindung miteinander verbunden sind. Der Sockel weist einen Abstandshalter 17 sowie eine an seine Oberseite angrenzende Auflageseite 14. Über den Abstandshalter 17 kann der Montageplattenhalter auf der Profilseite einer Profilstrebe eines rechteckigen Bodenrahmens eines Schaltschrankrahmengestells aufgesetzt werden. Die Profilseite kann dazu im Wesentlichen horizontal ausgerichtet sein.

Der Haltewinkel 7 erstreckt sich mit seiner Befestigungslasche 12 durch einen Durchlass 11 in der Auflageseite 14 durch den Sockel 8 hindurch, so dass sich die Befestigungslasche 12 im Wesentlichen senkrecht zu der Auflageseite 14 erstreckt. Wie noch mit Bezug auf die weiteren Figuren erklärt werden wird, kann eine Montageplatte mit der Stirnseite ihrer seitlichen vertikalen Umkantung auf der Auflageseite 14 aufstehen, während die Befestigungslasche 12 mit Hilfe des Durchbruchs 27 an der Umkantung der Montageplatte festgelegt werden kann. Dafür kann der Durchbruch 27 beispielsweise dazu dienen, eine Käfigmutter aufzunehmen.

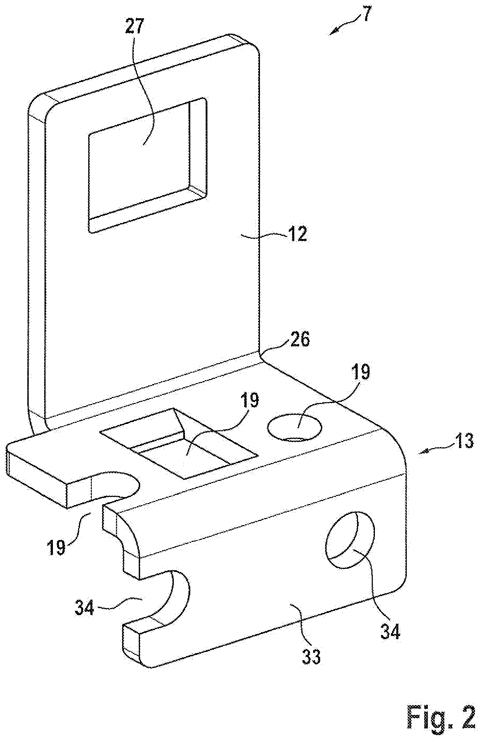

Der Haltewinkel 7 ist genauer in Figur 2 gezeigt. Er besteht im Wesentlichen aus einer Z-Abkantung, die wiederum aus dem L-förmigen Abschnitt 13 sowie der über eine 90°-Abkantung an diesen angrenzende Befestigungslasche 12 aufgebaut ist. Die Befestigungslasche 12 weist wiederum den Durchbruch 27 zur Befestigung eines Befestigungsmittels, beispielsweise einer Käfigmutter auf.

Die L-Umkantung 13 kann an ihrem dem Befestigungswinkel 12 abgewandten Ende einen Haltesteg 33 aufweisen, mit dem der Haltewinkel 7 den Befestigungsabschnitt des Profilrahmens hintergreifen kann, wenn sich die Montageplatte in der Vertikalen befindet, so dass die Montageplatte in der Ebene senkrecht zur Dichtebene festgelegt ist. Weitere Durchbrüche 34 in dem Haltesteg 33 können dazu verwendet werden, um den Haltewinkel 7 und damit den Montageplattenhalter 2 an dem Befestigungsabschnitt eines Bodenrahmens festzulegen. Der L-förmige Abschnitt 13 weist weiterhin Durchbrüche 19 auf, die ebenso dazu dienen können, den Haltewinkel 7 und damit den Montageplattenhalter 2 an einer horizontalen Befestigungsseite des Befestigungsabschnitts 6 zu verschrauben oder anderweitig festzulegen.

Die Zusammenschau der Figuren 1 und 2 zeigt, dass der Haltewinkel 7 und der Sockel 8 im Wesentlichen durch Zusammenstecken miteinander zu verbinden sind und es ist insbesondere nicht erforderlich, dass der Montageplattenhalter 2 einteilig ausgebildet ist, auch wenn je nach Ausführungsform ebenso denkbar sein kann, beispielsweise dann, wenn der Sockel 8 aus Kunststoff und der Haltewinkel 7 aus Stahl gefertigt ist, den Montageplattenhalter durch Umspritzen des Haltewinkels 7 mit dem Sockel 8 .

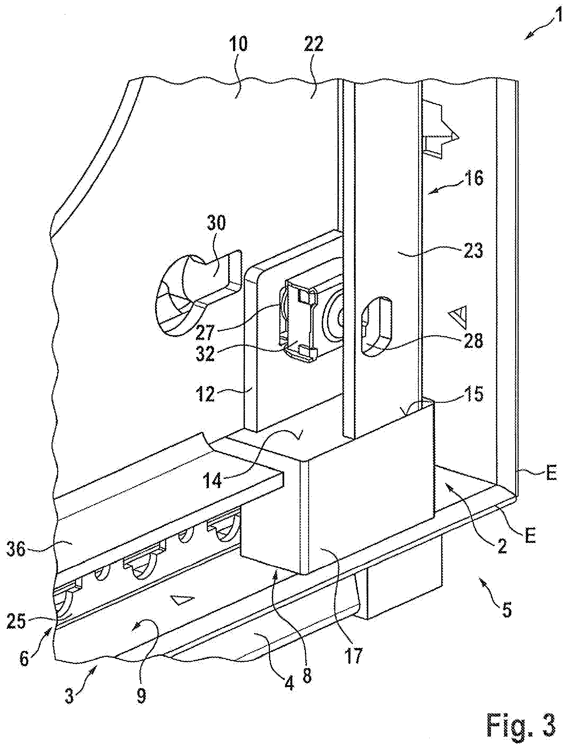

Die Figur 3 zeigt den in den Figuren 1 und 2 gezeigten Montageplattenhalter 2, wie dieser an der Unterseite einer Montageplatte 10 im Übergangsbereich von der unteren Abkantung 36 in die seitliche Umkantung 16 festgelegt ist. Insbesondere steht die Montageplatte 10 mit ihrer Stirnseite 15 der vertikalen seitlichen Umkantung 16 auf der Auflageseite 14 des Sockels 8 auf, während die Horizontalabkantung 36, die durch eine 90°-Abkantung der Montageseite 22 zur Rückseite der Montageplatte 10 gebildet ist, im Bereich der Umkantung 16 in einer Aussparung der Horizontalumkantung 36 aufgenommen ist. Die Befestigungslasche 12 weist eine in den Durchbruch 27 eingesetzte Käfigmutter 32 auf, die insbesondere über eine Rastverbindung mit dem Durchbruch 27 verbunden sein kann. Ein Bolzen 30 erstreckt sich von der Vorderseite der Montageplatte 10 durch die Montageseite 22 der Montageplatte 10, durch die Befestigungslasche 12 und die Käfigmutter 32 hindurch, um die Montageplatte 10 an der Befestigungslasche 12 festzulegen.

Das Schaltschrankrahmengestell 1 weist einen rechteckigen Bodenrahmen 3 aus vier Profilstreben 4 auf, der an seiner Außenseite 5 ein gegenüber einer äußeren Dichtebene E des Schaltschrankrahmengestells 1 zum Inneren des Schaltschrankrahmengestells 1 versetzten Befestigungsabschnitt 6 aufweist. Der Montageplattenhalter 2 ist mit dem Sockel auf einer Profilseite 9 der Profilstrebe 4 aufgesetzt, die sich zwischen der Dichtebene E und dem Befestigungsabschnitt 6 und zwar insbesondere zwischen der Montageebene ME und der äußeren Befestigungsprofilseite 25 des Befestigungsabschnitts 6, erstreckt.

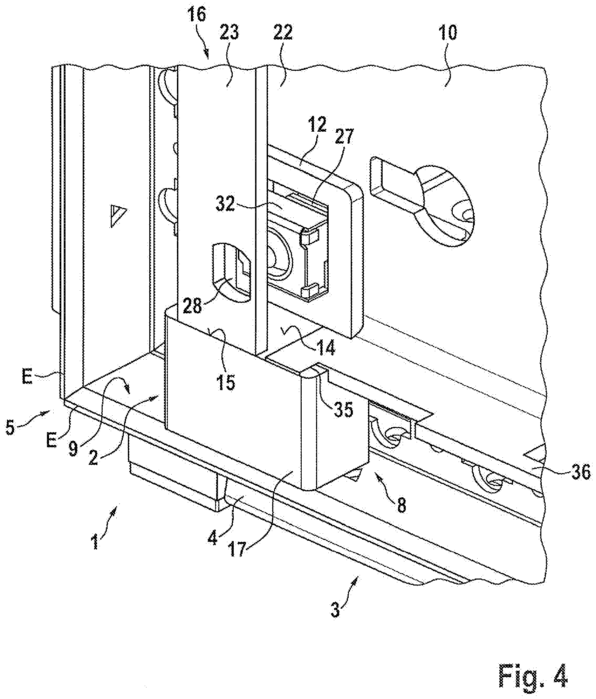

Im Vergleich zu der Anordnung gemäß Figur 3 ist bei der in Figur 4 vorgesehenen Montageplattenanordnung insbesondere vorgesehen, dass der Sockel 8 in seiner Auflageseite 14 einen Formschluss 35 aufweist, in dem die Horizontalumkantung 36 formschlüssig aufgenommen und damit der Montageplattenhalter 2 in Horizontalrichtung festgelegt ist.

Die Figuren 3 und 4 zeigen ebenso, dass die Umkantung 16 wohl in ihrer Montageprofilseite 22 als auch in ihrer Versteifungsprofilseite 23 jeweils einen Durchbruch 28 aufweisen kann, um wahlweise die Montageprofilseite 22 über die Versteifungsprofilseite 23 an der Befestigungslasche 12 des Haltewinkels 7 festzulegen, je nachdem, ob die Montageplatte 10 in einer "hintersten Position" angeordnet sein soll, in welcher die Montageebene der Montageplatte mit der äußeren Befestigungsprofilseite 25 des Befestigungsabschnitts 6 fluchtet, oder in einer "hinteren Montageposition" angeordnet sein soll, in welcher die Montageebene der Montageplatte 10 mit einer dem Inneren des Rahmengestells 1 zugewandten Befestigungsprofilseite 24 des Befestigungsabschnitts 6 fluchtet.

Die die in den Figuren 3 und 4 gezeigte Anordnung der Montageplatte 10 im Innern des Rahmengestells 1 gemäß der "hintersten Montageposition" ist sogleich die platzsparendste Montageart einer Montageplatte 10 im Inneren des Rahmengestells 1. Die Dichtebene E ist gerade durch eine umlaufende Dichtkante des Rahmengestells 1 gebildet, an welcher ein Flachteil des Schaltschranks, beispielsweise eine Rückwand des Schaltschranks, dichtend zur Anlage gebracht werden kann. Wie zu erkennen ist, ist einerseits der Sockel 8 und andererseits die Versteifungsprofilseite 23 der Dichtebene unmittelbar vorgelagert angeordnet.

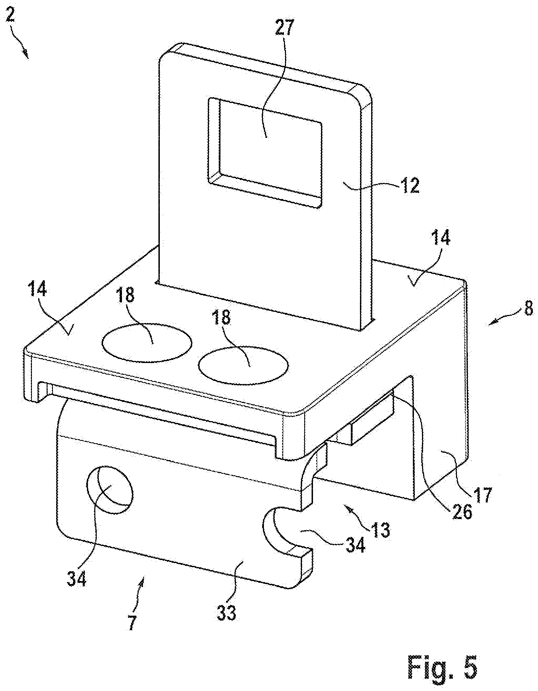

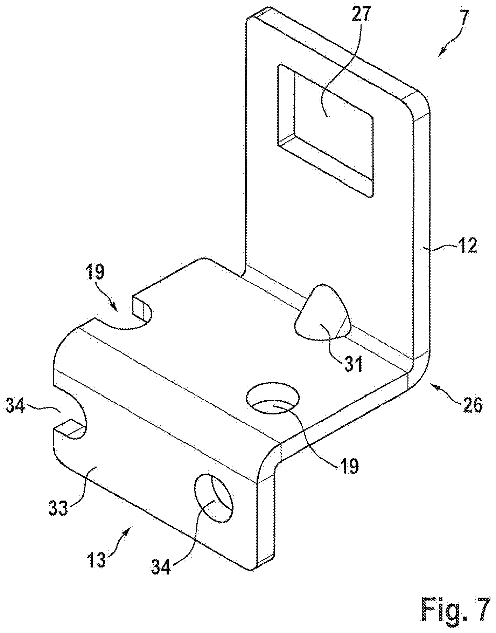

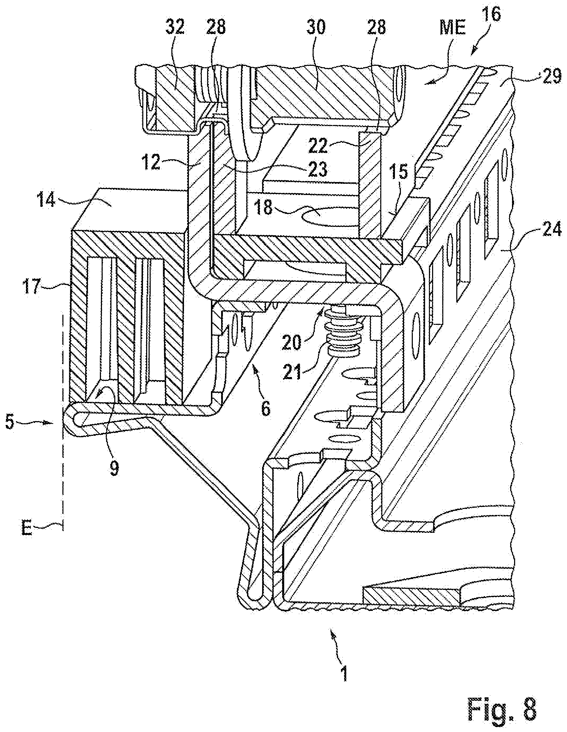

Die Figuren 5 bis 7 zeigen eine weitere Ausführungsform eines Montageplattenhalters, der sich gegenüber dem in den Figuren 1 und 2 gezeigten Montageplattenhalter insbesondere dadurch unterscheidet, dass die Auflageseite 14 des Sockels 8 eine horizontale Seite des L-förmigen Abschnitts 13 vollständig überragt, so dass für beide der zuvor beschriebenen Montagepositionen der Montageplatte in Bezug auf die Befestigungslasche 12 eine ebene, durchgängige Auflageseite 14 geschaffen wird. Des Weiteren weist die Auflageseite 14 erste Durchbrüche 18 auf, die mit zweiten Durchbrüchen 19 des Haltewinkels 7 fluchten. Wie in der Zusammenschau mit Figur 8 gezeigt ist, können die Durchbrüche 18, 19 mit einem weiteren Durchbruch 20 in einer horizontalen Befestigungsprofilseite 29 des Befestigungsabschnitts 6 fluchten, so dass die drei genannten Komponenten über einen Bolzen 21 miteinander verschraubt werden können.

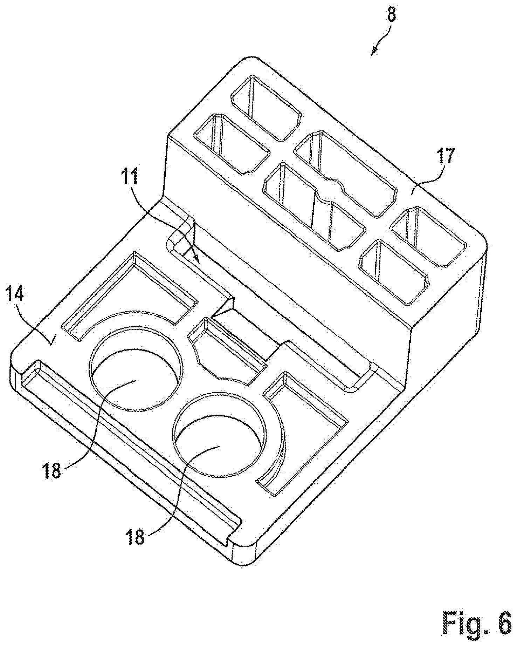

Wie sich insbesondere in Figur 6 deutlich zeigt, so kann der Sockel 8 an einem Übergang zwischen dem Abstandshalter 17, über den der Sockel 8 auf der Profilseite einer Profilstrebe des rechteckigen Bodenrahmens aufgesetzt werden kann, zu der Auflageseite 14 einen Durchlass 11 aufweisen, über welchen der Haltewinkel 7 (siehe Figur 5) mit seiner Lasche 12 hindurchtreten kann, bis die horizontale Seite des L-förmigen Abschnitts 13 flächig an der Unterseite der Auflageseite 14 anliegt und somit der Sockel 8 und der Haltewinkel 7 eine Einheit bilden. Unter einem Abstand zu dem Abstandshalter 17 und parallel zu diesem erstreckt sich an der Unterseite der Auflageseite 14 der Haltesteg 33 des L-förmigen Abschnitts 13, so dass in der von dem Haltesteg 33, dem Abstandshalter 17, sowie der horizontalen Seite des L-förmigen Abschnitts 13 gebildeten Aufnahme der Befestigungsabschnitt 6 (siehe Figur 8) aufgenommen werden kann. Zur Verstärkung des Haltewinkels 7 weist die 90°-Abkantung 26, über welche die Befestigungslasche 12 in den L-förmigen Abschnitt 13 übergeht, eine Sicke 31 auf.

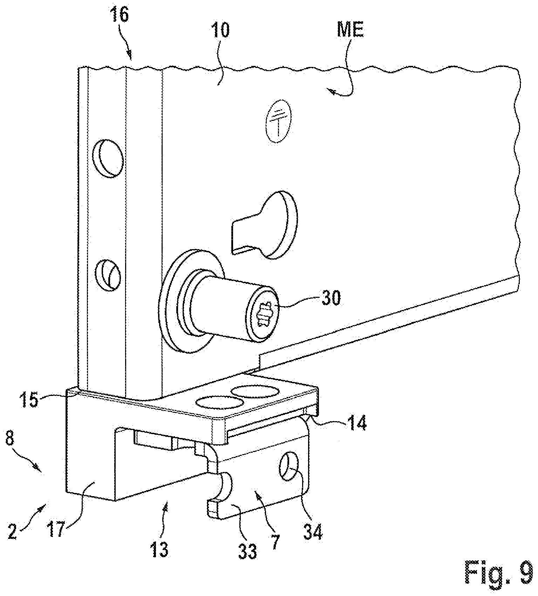

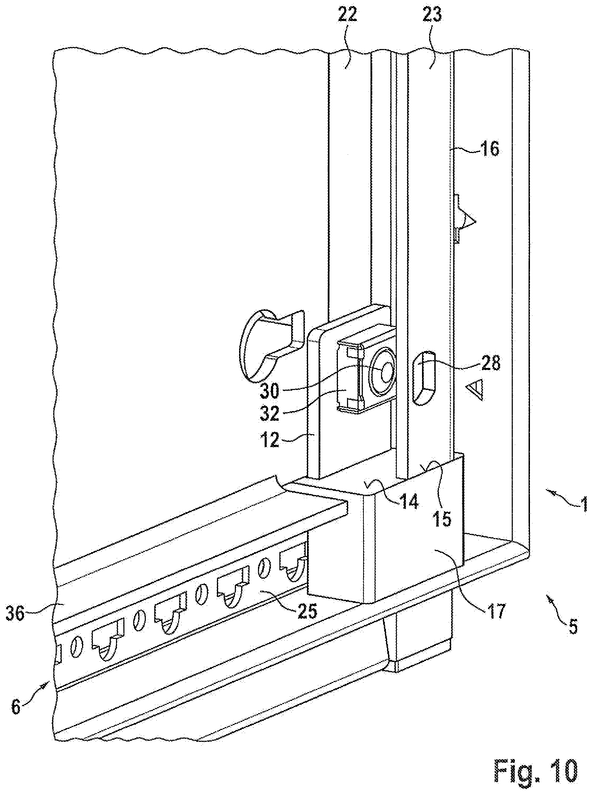

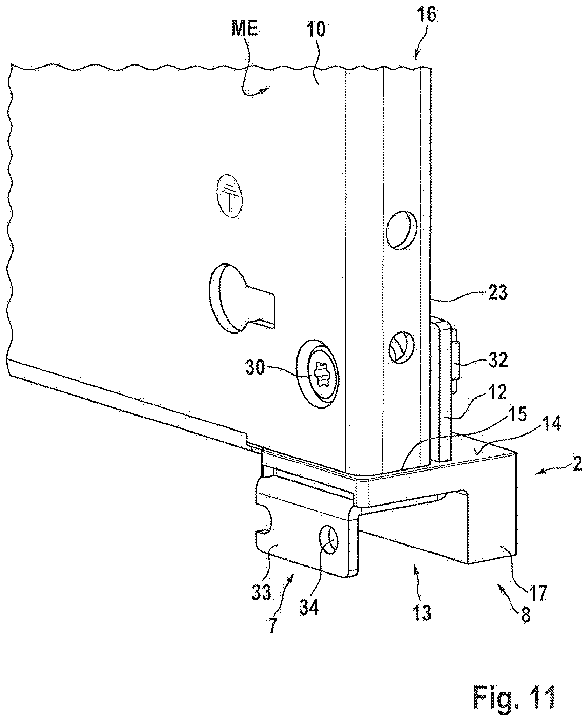

Während in den Figuren 8 und 11 bis 13 die Montageplatte 10 in der "hinteren Montageposition" angeordnet ist, bei welcher die Befestigungslasche 12 mit der Versteifungsprofilseite 23 verschraubt ist, ist die Montageplatte 10 in der Anordnung gemäß den Figuren 9 und 10 in der "hintersten Montageposition" angeordnet, bei der die Befestigungslasche 12 mit der Montageprofilseite 22 verschraubt ist. Bei der in Figur 8 gezeigten Montageanordnung ist die Umkantung 16 auf der Auflageseite 14 dem Abstandshalter 17 vorgelagert angeordnet, während bei der in den Figuren 9 und 10 gezeigten Montageposition die Umkantung 16 unmittelbar oberhalb des Abstandshalters 17 auf der Auflageseite 14 aufgesetzt und über die Montageebene ME an der Befestigungslasche 12 verschraubt ist.

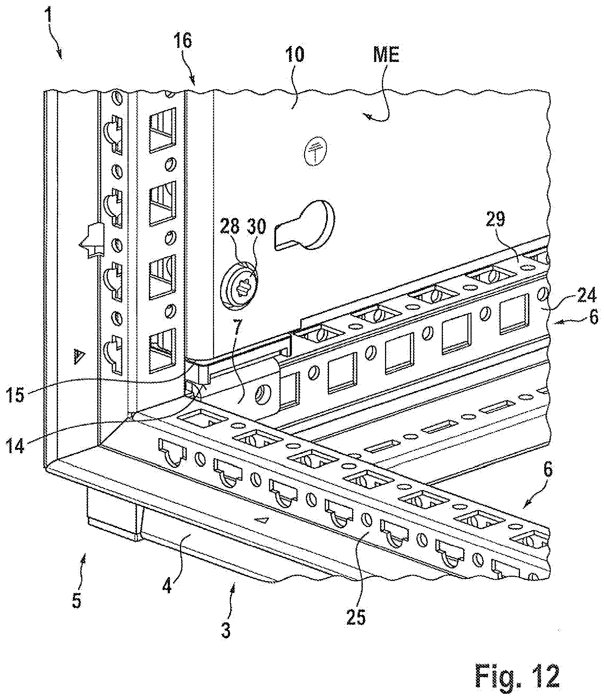

Die Figur 12 zeigt, dass bei der Anordnung der Montageplatte in der "hinteren Montageposition" (vergleiche auch Figur 8) die Montageebene ME mit einer inneren Befestigungsprofilseite 24 des Befestigungsabschnitts 6 fluchten kann, so dass im Inneren des Schaltschranks eine durchgängige Montageebene zwischen der inneren Befestigungsprofilseite 24 und der Montageebene ME geschaffen wird.

Wenn die Montageplatte von der Außenseite des Schaltschrankrahmengestells an das Schaltschrankrahmengestell angesetzt worden ist, verhindert dies nicht, dass die Montageplatte 10 in herkömmlicher Weise über die Innenseite des Schaltschrankrahmengestells 1 entnommen werden kann. Dazu ist es lediglich erforderlich, über die Montageebene ME und den darin vorgesehenen weiteren Durchbruch 28 den Befestigungsbolzen 30 zu lösen, so dass dieser mit der Käfigmutter 32 (vergleiche Figur 8) außer Eingriff gelangt. Da die Befestigungslasche 12, von der Innenseite des Schaltschrankrahmengestells betrachtet, hinter der Umkantung 16 angeordnet ist, kann nach dem Lösen des Bolzens 30 die Montageplatte 10 nach vorne entnommen werden.

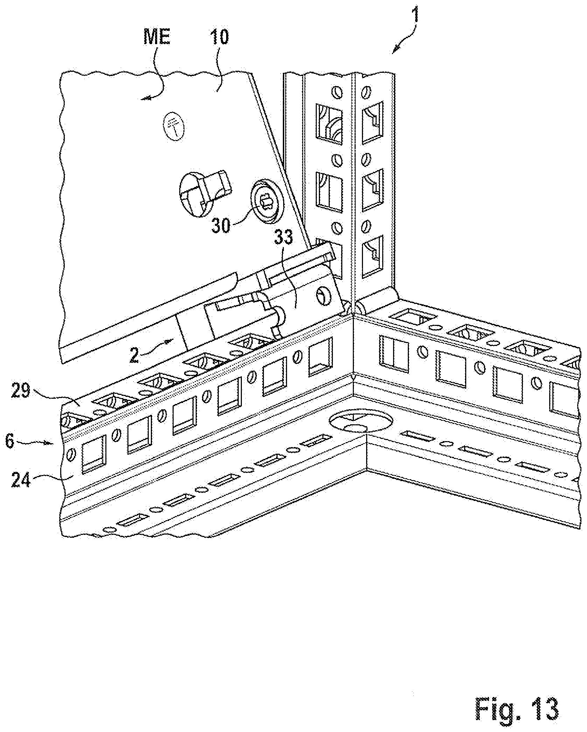

Wie in Figur 13 veranschaulicht ist, ermöglicht es die erfindungsgemäße Montageplattenanordnung, dass die Montageplatte 10 mit an ihrer Unterkante vormontierten Montageplattenhalter 2 von der Außenseite des Rahmengestells 1 an diesen in seine vertikale Montageposition eingeschwenkt werden kann, wobei der Halter 2 mit seinem Haltesteg 33 den Befestigungsabschnitt 6 hintergreift und an der inneren Befestigungsprofilseite 24 zur Anlage kommt, so dass dieser gegebenenfalls mit der Befestigungsprofilseite 24 verschraubt werden kann. Durch Lösen des Bolzens 30 kann die Montageplatte 10 jederzeit in üblicher Weise über die Innenseite des Rahmengestells 1 entnommen werden.

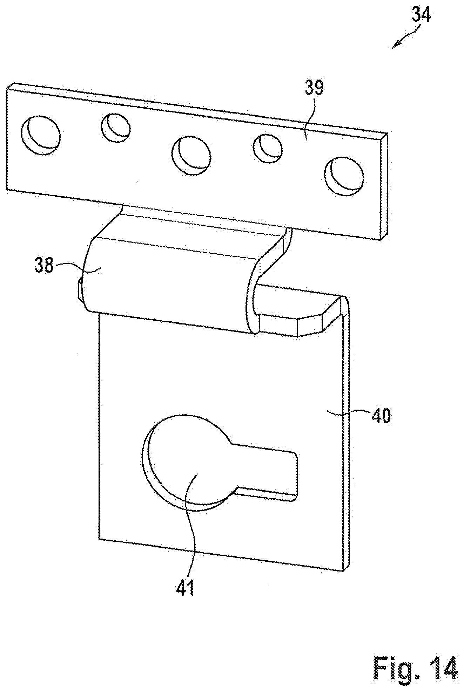

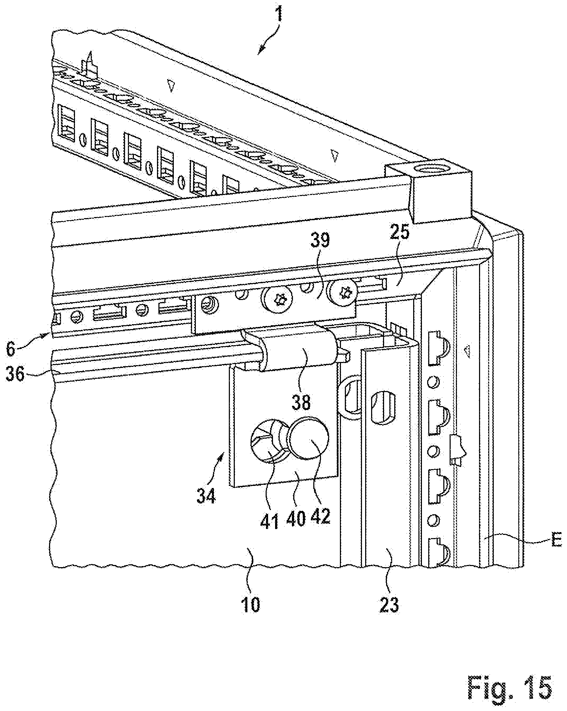

Die Figuren 14 und 15 zeigen eine mögliche Ausführungsform eines oberen Montageplattenhalters 37. Dieser weist einen Befestigungsflansch 39 auf, über den er an der äußeren Befestigungsprofilseite 25 eines Rahmengestells 1 festgelegt werden kann, sowie einen Anlageflansch 40, über den der Halter 37 an der Rückseite der Montageebene ME einer Montageplatte zur Anlage gebracht und mit der Montageplatte 10 mithilfe eines Bolzens 42m verschraubt werden kann. Der Befestigungsflansch 39 und der Anlageflansch 40 sind über eine Kröpfung 38 miteinander verbunden, in die eine Horizontalumkantung 36 der Montageplatte 10 von der Innenseite des Rahmengestells 1 eingreift. Dies ermöglicht, dass auch nach erfolgter Montage der Montageplatte 10 über die Außenseite des Rahmengestell 1 die Montageplatte 10 nachträglich in gewohnter Weise über die Innenseite des Rahmengestells aus dem Schaltschrank entnommen werden kann, beispielsweise wenn die Rückseite des Rahmengestells nach der Montage der Montageplatte 10 mit einem Flachteil von außen verschlossen ist.

### Bezugszeichenliste

- 1: Schaltschrankrahmengestell
- 2: Montageplattenhalter
- 3: Bodenrahmen
- 4: Profilstrebe
- 5: Außenseite
- 6: Befestigungsabschnitt
- 7: Haltewinkel
- 8: Sockel
- 9: Profilseite
- 10: Montageplatte
- 11: Durchlass
- 12: Befestigungslasche
- 13: L-förmiger Abschnitt
- 14: Auflageseite
- 15: Stirnseite
- 16: Umkantung
- 17: Abstandshalter
- 18: erster Durchbruch
- 19: zweiter Durchbruch
- 20: dritter Durchbruch
- 21: Befestigungsmittel
- 22: Montageprofilseite
- 23: Versteifungsprofilseite
- 24: innere Befestigungsprofilseite
- 25: äußere Befestigungsprofilseite
- 26: 90°-Abkantung
- 27: vierter Durchbruch
- 28: weiterer Durchbruch
- 29: horizontale Befestigungsprofilseite
- 30: Bolzen
- 31: Sicke
- 32: Käfigmutter
- 33: Haltesteg
- 34: weiterer Durchbruch
- 35: Formschluss
- 36: Horizontalumkantung
- 37: oberer Halter
- 38: Kröpfung
- 39: Befestigungsflansch
- 40: Anlageflansch
- 41: Schlüsselloch
- 42: Bolzen
- E: Dichtebene
- ME: Montageebene

## Patentansprüche

1. Montageplattenanordnung mit einem Schaltschrankrahmengestell (1) und einer daran über mindestens einen Montageplattenhalter (2) befestigten Montageplatte (10), wobei das Schaltschrankrahmengestell (1) einen rechteckigen Bodenrahmen (3) aus vier Profilstreben (4) aufweist, der an seiner Außenseite (5) einen gegenüber einer äußeren Dichtebene (E) des Schaltschrankrahmengestells (1) zum Innern des Schaltschrankrahmengestells (1) versetzten Befestigungsabschnitt (6) aufweist, wobei der Montageplattenhalter (2) mehrteilig ausgebildet ist, mit einem Haltewinkel (7) und einem mit dem Haltewinkel (7) verbundenen Sockel (8), wobei der Haltewinkel (7) mit dem Befestigungsabschnitt (6) und mit der Montageplatte (10) verbunden ist und die Montageplatte (10) auf dem Sockel (8) aufsteht,
**dadurch gekennzeichnet, dass**
der Montageplattenhalter (2) mit dem Sockel (8) auf einer Profilseite (9) einer der vier Profilstreben (4) aufgesetzt ist, die sich zwischen der Dichtebene (E) und dem Befestigungsabschnitt (6) erstreckt.

2. Montageplattenanordnung nach Anspruch 1, bei der der Haltewinkel (7) mit dem Sockel (8) über eine Steckverbindung verbundenen ist.

3. Montageplattenanordnung nach Anspruch 1 oder 2, bei der der Sockel (8) einen Durchlass (11) aufweist, durch den sich der Haltewinkel (7) mit einer Befestigungslasche (12) zwischen gegenüber liegenden Seiten des Sockels (8) hindurch erstreckt, wobei die Montageplatte (10) an der Befestigungslasche (12) festgelegt ist.

4. Montageplattenanordnung nach einem der vorangegangen Ansprüche, bei der Haltewinkel (7) einen L-förmigen Abschnitt (13) aufweist, mit dem er den Befestigungsabschnitt (6) umgreift.

5. Montageplattenanordnung nach einem der vorangegangen Ansprüche, bei der der Sockel (8) mit einer Auflageseite (14) auf einem L-förmigen Abschnitt (13) des Haltewinkels (7), mit dem er den Befestigungsabschnitt (6) umgreift, aufliegt, wobei die Montageplatte (10) mit einer Stirnseite (15) einer Umkantung (16) an ihrem Außenumfang auf der Auflageseite (14) aufsteht.

6. Montageplattenanordnung nach einem der vorangegangen Ansprüche, bei der der Sockel (8) einen Abstandshalter (17) und eine Auflageseite (14) aufweist, durch die sich der Haltewinkel (7) mit einer Befestigungslasche (12) erstreckt, an der die Montageplatte (10) festgelegt ist.

7. Montageplattenanordnung nach Anspruch 6, bei der die Auflageseite (14) einen ersten Durchbruch (18) und ein L-förmiger Abschnitt (13) des Haltewinkels (7), mit dem der Haltewinkel (7) den Befestigungsabschnitt (6) umgreift, einen zweiten Durchbruch (19) und der Befestigungsabschnitt (6) einen dritten Durchbruch (20) aufweist, wobei diese drei Durchbrüche (18, 19, 20) fluchten und ein Befestigungsmittel (21), insbesondere ein Gewindebolzen durch die fluchtenden Durchbrüche (18, 19, 20) hindurch geführt ist.

8. Montageplattenanordnung nach einem der vorangegangen Ansprüche, bei der die Montageplatte (10) an einem vertikalen Außenumfang eine Umkantung (16) aufweist, insbesondere eine C-Umkantung oder einer U-Umkantung, mit einer in einer Montageebene (ME) der Montageplatte (10) liegenden ersten Montageprofilseite (22) und einer dazu senkrecht zu der Montageebene (ME) beabstandet angeordneten Versteifungsprofilseite (23), wobei
a) in einer ersten Montageposition die Montageplatte (10) über die Montageprofilseite (22) an einer Befestigungslasche (12) des Haltewinkels (7) anliegt und festgelegt ist, und/oder
b) in einer zweiten Montageposition die Montageplatte (10) über die Versteifungsprofilseite (23) an einer Befestigungslasche (12) des Haltewinkels (7) anliegt und festgelegt ist.

9. Montageplattenanordnung nach Anspruch 8, bei der in der ersten Montageposition die Montageprofilseite (22) mit einer dem Innern des Schaltschrankrahmengestells (1) zugewandten inneren Befestigungsprofilseite (24) des Befestigungsabschnitts (6) und/oder in der zweiten Montageposition die Montageprofilseite (22) mit einer der Dichtebene (E) zugewandten äußeren Befestigungsprofilseite (25) des Befestigungsabschnitts (6) fluchtet.

10. Montageplattenanordnung nach einem der vorangegangen Ansprüche, bei der der Haltewinkel (7) ein erstes Material und der Sockel (8) ein von dem ersten abweichendes zweites Material aufweist, wobei das Elastizitätsmodul des ersten Materials größer als das Elastizitätsmodul des zweiten Materials ist.

11. Montageplattenanordnung nach Anspruch 10, bei der das erste Material ein Metall, insbesondere ein Stahl, und das zweite Material ein Kunststoff, insbesondere ein thermoplastischer Kunststoff und vorzugsweise ein Polyamid ist.

12. Montageplattenanordnung nach einem der vorangegangen Ansprüche, bei der der Haltewinkel (7) ein Z-Profil ist, mit einem L-förmigen Abschnitt (13), mit dem der Haltewinkel (7) den Befestigungsabschnitt (6) umgreift, und mit einer über eine 90°-Abkantung (26) in den L-förmigen Abschnitt (13) übergehenden Befestigungslasche (12), die einen vierten Durchbruch (27) aufweist, der mit einem weiteren Durchbruch (28) in einer Umkantung (16) am Außenumfang der Montageplatte (10) fluchtet.

13. Montageplattenanordnung nach Anspruch 10, bei der der Sockel (8) einen Abstandshalter (17), über den der Sockel (8) auf der Profilseite (9) der Profilstrebe (4) aufsteht, sowie eine Auflageseite (14) aufweist, mit der der Montageplattenhalter (2) eine horizontale Befestigungsprofilseite (29) des Befestigungsabschnitts (6) überragt, wobei ein Durchlass (11) durch den Sockel (8), durch den sich der Haltewinkel (7) mit einer Befestigungslasche (12) erstreckt, in einem Übergang zwischen dem Abstandshalter (17) und der Auflageseite (14) angeordnet ist und der Haltewinkel (7) angrenzend an die 90°-Abkantung (26) mit seiner Befestigungslasche (12) an dem Abstandshalter (17) anliegt.

14. Verfahren für die Montage einer Montageplattenanordnung nach einem der vorangegangen Ansprüche, das die Schritte aufweist:
- Bereitstellen eines Schaltschrankrahmengestells (1) mit einem rechteckigen Bodenrahmen (3) aus vier Profilstreben (4), wobei der Bodenrahmen (3) an seiner Außenseite (5) einen gegenüber einer äußeren Dichtebene (E) des Schaltschrankrahmengestells (1) zum Innern des Schaltschrankrahmengestells (1) versetzten Befestigungsabschnitt (6) aufweist;
- Bereitstellen einer Montageplatte (10) und eines Montageplattenhalters (2), der mehrteilig ausgebildet ist und einen Haltewinkel (7) sowie einen mit dem Haltewinkel (7) lösbar verbundenen Sockel (8) aufweist,
- Montieren des Montageplattenhalters (2) an der Montagplatte, indem eine Befestigungslasche (12) des Haltewinkels (7) an einer Umkantung (16) an einer vertikalen Außenberandung der Montageplatte (10) festgelegt wird, so dass eine Stirnseite (15) der Umkantung (16) auf dem Sockel (8) aufliegt; und
- Aufsetzen der Montageplatte (10) über den Sockel (8) auf einer Profilseite (9) einer der vier Profilstreben (4), die sich zwischen der Dichtebene (E) und dem Befestigungsabschnitt (6) erstreckt sowie gegebenenfalls Einschwenken der Montageplatte (10) bis eine Montageebene (ME) der Montageplatte (10) in die Vertikale gebracht ist.

15. Verfahren nach Anspruch 14, bei dem das Bereitstellen des Montageplattenhalters (2) das Verbinden des Haltewinkels (7) mit dem Sockel (8) aufweist, indem die Befestigungslasche (12) des Haltewinkels (7) über einen Durchlass (11) des Sockels (8) durch den Sockel (8) hindurch gesteckt wird, bis ein L-förmiger Abschnitt (13) des Haltewinkels (7) an einer Auflageseite (14) des Sockels (8) anliegt.

16. Verfahren nach Anspruch 14 oder 15, bei dem das Aufsetzen der Montageplatte (10) das Aufsetzen der Montageplatte (10) über die Außenseite (5) des Bodenrahmens (3) und/oder durch die äußere Dichtebene (E) des Schaltschrankrahmengestells (1) aufweist.

17. Verfahren nach einem der Anspruche 14 bis 16, bei dem nach dem Aufsetzen der Montageplatte (10) die Montageplatte (10) über eine dem Innern des Schaltschrankrahmengestells (1) zugewandte innere Befestigungsprofilseite (24) des Befestigungsabschnitts (6) entnommen wird.

## Claims

1. A mounting plate arrangement with a switch cabinet frame (1) and a mounting plate (10) fastened thereto via at least one mounting plate holder (2), wherein the switch cabinet frame (1) has a rectangular floor frame (3) with four profile struts (4), which has on its outer side (5) a fastening section (6) offset relative to an outer sealing plane (E) of the switch cabinet frame (1) relative to the interior of the switch cabinet frame (1), wherein the mounting plate holder (2) is formed in multiple parts, with a support bracket (7) and with a base (8) connected to the support bracket (7), wherein the support bracket (7) is connected to the fastening section (6) and to the mounting plate (10) and the mounting plate (10) stands on the base (8), **characterized in that** the mounting plate holder (2) with the base (8) is placed on a profile side (9) of one of the four profile struts (4) extending between the sealing plane (E) and the fastening section (6).

2. The mounting plate arrangement according to claim 1, in which the support bracket (7) is connected to the base (8) via a plug connection.

3. The mounting plate arrangement according to claim 1 or 2, in which the base (8) has a passage (11) through which the support bracket (7) extends with a fixing tab (12) between opposite sides of the base (8), the mounting plate (10) being fixed to the fixing tab (12).

4. The mounting plate arrangement according to any of the preceding claims, in which the support bracket (7) has an L-shaped section (13), with which it embraces the fastening section (6).

5. The mounting plate arrangement according to any of the preceding claims, in which the base (8) rests with a support side (14) on an L-shaped section (13) of the support bracket (7) with which it embraces the fastening section (6), wherein the mounting plate (10) stands on the support side (14) with a front face (15) of an edging (16) on its outer circumference.

6. The mounting plate arrangement according to any of the preceding claims, in which the base (8) has a spacer (17) and a support side (14), the support bracket (7) extending through the support side (14) with a fixing tab (12), and the mounting plate (10) being fixed to the fixing tab (12).

7. The mounting plate arrangement according to claim 6, in which the support side (14) has a first opening (18) and a L-shaped section (13) of the support bracket (7), with which the support bracket (7) embraces the fastening section (6), has a second opening (19) and the fastening section (6) has a third opening (20), the three openings (18, 19, 20) being aligned and a fastener (21), in particular a threaded bolt, passing through the aligned openings (18, 19, 20).

8. The mounting plate arrangement according to any of the preceding claims, in which the mounting plate (10) has an edging (16) on a vertical outer circumference, in particular a C-edging or an U-edging, with a first mounting profile side (22) arranged in a mounting plane (ME) of the mounting plate (10) and a reinforcing profile side (23) spaced therefrom perpendicularly to the mounting plane (ME), wherein
a) in a first mounting position, the mounting plate (10) rests against and is fixed to a fixing tab (12) of the support bracket (7) via the mounting profile side (22), and/or
b) in a second mounting position, the mounting plate (10) can rest against and be fixed to a fixing tab (12) of the support bracket (7) via the reinforcing profile side (23).

9. The mounting plate arrangement according to claim 8, in which in the first mounting position, the mounting profile side (22) is aligned with an inner fastening profile side (24) of the fastening section (6) facing the interior of the switch cabinet frame (1) and/or, in the second mounting position, the mounting profile side (22) is aligned with an outer fastening profile side (25) of the fastening section (6) facing the sealing plane (E).

10. The mounting plate arrangement according to any of the preceding claims, in which the support bracket (7) comprises a first material and the base (8) comprises a second material different from the first material, the modulus of elasticity of the first material being larger than the modulus of elasticity of the second material.

11. The mounting plate arrangement according to claim 10, in which the first material is a metal, in particular a steel, and the second material is a plastic, in particular a thermoplastic and preferably a polyamide.

12. The mounting plate arrangement according to any of the preceding claims, in which the support bracket (7) is a Z-profile, having an L-shaped section (13) with which the support bracket (7) embraces the fastening section (6), and having a fixing tab (12) which merges into the L-shaped section (13) via a 90° bend (26) and has a fourth opening (27) which is aligned with another opening (28) in an edging (16) on the outer circumference of the mounting plate (10).

13. The mounting plate arrangement according to claim 10, in which the base (8) has a spacer (17) with which the base (8) stands on the profile side (9) of the profile strut (4), and a support side (14) with which the mounting plate holder (2) projects over a horizontal fixing profile side (29) of the fastening section (6), wherein a passage (11) is arranged through the base (8), through which the support bracket (7) extends with a fixing tab (12), in a transition between the spacer (17) and the support side (14) and the support bracket (7) rests against the spacer (17) with its fixing tab (12) adjacent to the 90° bend (26).

14. A method for mounting a mounting plate arrangement according to any of the preceding claims, which comprises the steps:
- providing a switch cabinet frame (1) with a rectangular floor frame(3) with four profile struts (4), wherein the floor frame (3) has on its outer side (5) a fastening section (6) offset relative to an outer sealing plane (E) of the switch cabinet frame (1) to the interior of the switch cabinet frame (1);
- providing a mounting plate (10) and a mounting plate holder (2) which is formed in multiple parts and comprises a support bracket (7) and a base (8) releasably connected to the support bracket (7);
- mounting the mounting plate holder (2) on the mounting plate by fixing a fixing tab (12) of the support bracket (7) to an edging (16) on a vertical outer edge of the mounting plate (10) so that a front face (15) of the edging (16) rests on the base (8); and
- placing the mounting plate (10) via the base (8) on a profile side (9) of one of the four profile struts (4) extending between the sealing plane (E) and the fastening section (6) and, if necessary, swivelling the mounting plate (10) until a mounting plane (ME) of the mounting plate (10) is brought into the vertical.

15. The method according to claim 14, in which providing the mounting plate holder (2) comprises connecting the support bracket (7) to the base (8) by pushing the fixing tab (12) of the support bracket (7) through the base (8) via a passage (11) of the base (8) until an L-shaped section (13) of the support bracket rests (7) against a support side (14) of the base (8).

16. The method according to claim 14 or 15, in which placing the mounting plate (10) comprises placing the mounting plate (10) via the outer side (5) of the floor frame (3) and/or via the outer sealing plane (E) of the switch cabinet frame (1).

17. The method according to any of claims 14 to 16, in which after placing the mounting plate (10), the mounting plate (10) is removed via an inner fastening profile side (24) of the fastening section (6) facing the interior of the switch cabinet frame (1).

## Revendications

1. Dispositif de plaque de montage avec un châssis d'armoire de commande (1) et une plaque de montage (10) fixé à celui-ci par l'intermédiaire d'au moins un support de plaque de montage (2), dans lequel le châssis d'armoire de commande (1) comprend un cadre de fond rectangulaire (3), constitué de quatre montants profilés (4), qui comprend, sur sa face externe (5) une portion de fixation (6) décalée par rapport à un plan d'étanchéité externe (E) du châssis d'armoire de commande (1) vers l'intérieur du châssis d'armoire de commande (1), dans lequel le support de plaque de montage (2) est constitué de plusieurs parties, avec un angle de maintien (7) et un socle (8) relié avec l'angle de maintien (7), dans lequel l'angle de maintien (7) est relié avec la portion de fixation (6) et avec la plaque de montage (10) et la plaque de montage (10) est posée sur le socle (8), **caractérisé en ce que** le support de plaque de montage (2) est posé avec le socle (8) sur une face profilée (9) d'une des quatre montants profilés (4), qui s'étend entre le plan d'étanchéité (E) et la portion de fixation (6).

2. Dispositif de plaque de montage selon la revendication 1, dans lequel l'angle de maintien (7) est relié avec le socle (8) par l'intermédiaire d'une liaison enfichée.

3. Dispositif de plaque de montage selon la revendication 1 ou 2, dans lequel le socle (8) comprend un passage (11) à travers lequel l'angle de maintien (7) s'étend avec une patte de fixation (12) entre des faces opposées du socle (8), dans lequel la plaque de montage (10) est fixée à la patte de fixation (12).

4. Dispositif de plaque de montage selon l'une des revendications précédentes, dans lequel l'angle de maintien (7) comprend une portion en forme de L (13) avec laquelle il entoure la portion de fixation (6).

5. Dispositif de plaque de montage selon l'une des revendications précédentes, dans lequel le socle (8) repose, avec une face d'appui (14), sur une portion en forme de L (13) de l'angle de maintien (7), avec laquelle il entoure la portion de fixation (6), dans lequel la plaque de montage (10) repose sur la face d'appui (14) avec une face frontale (15) d'un pliage (16) sur sa circonférence externe .

6. Dispositif de plaque de montage selon l'une des revendications précédentes, dans lequel le socle (8) comprend une entretoise (17) et une face d'appui (14) à travers laquelle s'étend l'angle de maintien (7) avec une patte de fixation (12), à laquelle la plaque de montage (10) est fixée.

7. Dispositif de plaque de montage selon la revendication 6, dans lequel la face d'appui (14) comprend un premier passage (18) et une portion en forme de L (13) de l'angle de maintien (7), avec laquelle l'angle de maintien (7) entoure la portion de fixation (6), un deuxième passage (19), et la portion de fixation (6) comprend un troisième passage (20), dans lequel des trois passages (18, 19, 20) sont alignés et un moyen de fixation (21), plus particulièrement une tige filetée, est guidée à travers les passages (18, 19, 20) alignés.

8. Dispositif de plaque de montage selon l'une des revendications précédentes, dans lequel la plaque de montage (10) comprend, sur une circonférence externe verticale, un pliage (16), plus particulièrement un pliage en forme de C ou un pliage en forme de U, avec une première face profilée de montage (22) se trouvant dans un plan de montage (ME) de la plaque de montage (10) et une face profilée de rigidification (23), perpendiculaire à celle-ci, disposée à distance du plan de montage (ME), dans lequel
a) dans une première position de montage, la plaque de montage (10) s'appuie et est fixée, par l'intermédiaire de la face profilée de montage (22), contre une patte de fixation (12) de l'angle de maintien (7) et/ou
b) dans une deuxième position de montage, la plaque de montage (10) s'appuie et est fixée, par l'intermédiaire de la face profilée de rigidification (23), contre une patte de fixation (12) de l'angle de maintien (7).

9. Dispositif de plaque de montage selon la revendication 8, dans lequel, dans première position de montage, la face profilée de montage (22) est alignée avec une face profilée de fixation interne (24), orientée vers l'intérieur du châssis d'armoire de commande (1), de la portion de fixation (6) et/ou dans la deuxième position de montage, la face profilée de montage (22) est alignée avec une face profilée de fixation externe (25), orientée vers le plan d'étanchéité (E), de la portion de fixation (6).

10. Dispositif de plaque de montage selon l'une des revendications précédentes, dans lequel l'angle de maintien (7) comprend un premier matériau et le socle (8) comprend un deuxième matériau différent du premier, dans lequel le module d'élasticité du premier matériau est supérieur au module d'élasticité du deuxième matériau.

11. Dispositif de plaque de montage selon la revendication 10, dans lequel le premier matériau est un métal, plus particulièrement un acier, et le deuxième matériau est une matière plastique, plus particulièrement une matière plastique thermoplastique et de préférence un polyamide.

12. Dispositif de plaque de montage selon l'une des revendications précédentes, dans lequel l'angle de maintien (7) est un profilé en forme de Z, avec une portion en forme de L (13), avec laquelle l'angle de maintien (7) entoure la portion de fixation (6), et avec une patte de fixation (12) se transformant, par l'intermédiaire d'un pliage à 90° (26), dans la portion en forme de L (13), qui comprend un quatrième passage (27), qui est aligné avec un autre passage (28) dans un pliage (16) sur la circonférence externe de la plaque de montage (10).

13. Dispositif de plaque de montage selon la revendication 10, dans lequel le socle (8) comprend une entretoise (17) par l'intermédiaire duquel le socle (8) repose sur la face profilée (9) du montant profilé (4), ainsi qu'une face d'appui (14) avec laquelle le support de plaque de montage (2) dépasse d'une face profilée de fixation horizontale (29) de la portion de fixation (6), dans lequel un passage (11) à travers le socle (8), à travers lequel s'étend l'angle de maintien (7) avec une patte de fixation (12), est disposé dans une transition entre l'entretoise (17) et la face d'appui (14) et l'angle de maintien (7) s'appuie, de manière adjacente au pliage à 90° (26), avec sa patte de fixation (12), contre l'entretoise (17).

14. Procédé pour le montage d'un dispositif de plaque de montage selon l'une des revendications précédentes, qui comprend les étapes suivantes :
- mise à disposition d'un châssis d'armoire de commande (1) avec un cadre de fond rectangulaire (3) constitué de quatre montants profilés (4), dans lequel le cadre de fond (3) comprend, sur sa face externe (5), une portion de fixation (6) décalée par rapport à un plan d'étanchéité externe (E) du châssis d'armoire de commande (1) vers l'intérieur du châssis d'armoire de commande (1) ;
- mise à disposition d'une plaque de montage (10) et d'un support de plaque de montage (2) qui est constitué de plusieurs parties et qui comprend un angle de maintien (7) ainsi qu'un socle (8) relié de manière amovible avec l'angle de maintien (7),
- montage du support de plaque de montage (2) sur la plaque de montage, grâce au fait que la patte de fixation (12) de l'angle de maintien (7) est fixée à un pliage (16) sur une bordure externe verticale de la plaque de montage (10), de façon à ce qu'une face frontale (15) du pliage (16) repose sur le socle (8) ; et
- pose de la plaque de montage (10) par l'intermédiaire du socle (8) sur une face profilée (9) d'un des quatre montants profilés (4) qui s'étend entre le plan d'étanchéité (E) et la portion de fixation (6) ainsi que, le cas échéant, le pivotement de la plaque de montage (10) jusqu'à ce qu'un plan de montage (ME) de la plaque de montage (10) soit amené à la verticale.

15. Procédé selon la revendication 14, dans lequel la mise à disposition du support de plaque de montage (2) comprend la liaison de l'angle de maintien (7) avec le socle (8), grâce au fait que la patte de fixation (12) de l'angle de maintien (7) soit enfichée, par l'intermédiaire d'un passage (11), à travers le socle (8), jusqu'à ce qu'une portion en forme de L (13) de l'angle de maintien (7) s'appuie contre une face d'appui (14) du socle (8).

16. Procédé selon la revendication 14 ou 15, dans lequel la pose de la plaque de montage (10) comprend la pose de la plaque de montage (10) au-dessus de la face externe (5) du cadre de fond (3) et/ou à travers le plan d'étanchéité externe (E) du châssis d'armoire de commande (1).

17. Procédé selon l'une des revendications 14 à 16, dans lequel, après la pose de la plaque de montage (10), la plaque de montage (10) retirée par l'intermédiaire d'une face profilée de fixation interne (24), orientée vers l'intérieur du châssis d'armoire de commande (1), de la portion de fixation (6).
